Europäisches Patentamt

European Patent Office

Office européen des brevets

(11) Veröffentlichungsnummer: **0 056 950**

**A1**

## (12) EUROPÄISCHE PATENTANMELDUNG

(21) Anmeldenummer: **82100216.9**

(22) Anmeldetag: **14.01.82**

(51) Int. Cl.³: **B 60 S 3/06**

(30) Priorität: **22.01.81 DE 3101927**

(43) Veröffentlichungstag der Anmeldung:
**04.08.82 Patentblatt 82/31**

(84) Benannte Vertragsstaaten:
**AT CH DE FR GB LI SE**

(71) Anmelder: **Siewert, Rudolf**
**Gerokstrasse 18**
**D-7132 Illingen(DE)**

(72) Erfinder: **Siewert, Rudolf**
**Gerokstrasse 18**
**D-7132 Illingen(DE)**

(74) Vertreter: **Commentz, Gerd, Dipl.-Ing.**
**Klippeneckstrasse 4**
**D-7000 Stuttgart 1(DE)**

(54) **Waschanlage für Kraftfahrzeuge od. dgl.**

(57) Bei der auf der Zeichnung dargestellten Waschanlage ist das die vier ein- und ausschwenkbaren Waschbürsten (24) bis (27) tragende Portal (17) zusammen mit den letzteren in Richtung des Pfeiles (20) derart hin- und herfahrbar, daß es dem Vorschub des zu reinigenden Fahrzeuges teilweise zu folgen vermag, was wieder eine Erhöhung der Vorschubgeschwindigkeit des zu reinigenden Fahrzeuges zuläßt und die Betriebssicherheit wesentlich erhöht. Auch sind, um die Frontseite sowie die Heckseite des Fahrzeuges exakt säubern zu können, die Waschbürsten (24) und (25) bzw. (26) und (27) jeweils um das Maß (c) zueinander versetzt.

*Fig.1*

EP 0 056 950 A1

PATENTANWALT

DIPL.-ING. GERD COMMENTZ

7 STUTTGART 1

KLIPPENECKSTRASSE 4 · TELEFON (0711) 465644

13. Januar 1982 C/F

0056950

R 1705 EP

Rudolf Siewert, Gerokstrasse 18, 7132 Illingen/Württ.

Bundesrepublik Deutschland

## Waschanlage für Kraftfahrzeuge od. dgl.

Die vorliegende Erfindung betrifft eine für Kraftfahrzeuge od. dgl. geeignete Waschanlage, die aus mindestens vier paarweise beiderseits des Kraftfahrzeugvorschubweges angeordneten, maschinell angetriebenen und um senkrechte Drehachsen umlaufenden Waschbürsten, wobei jede Waschbürste an dem freien Ende mindestens eines um eine vertikale Achse schwenkbaren Tragarmes angeordnet ist und diese Tragarme wieder an den beiderseitigen Stützen eines längs des Vorschubweges hin- und herfahrbaren Portales angelenkt sind.

Bei den bisher bekannten verfahrbaren Waschanlagen sind deren Portale quer zur Vorschubrichtung angeordnet. Damit aber stoßen die mittels Tragarmen an den Portalen schwenkbar angelenkten Bürsten in ihrer eingeschwenkten Stellung immer dann in der Längsmittelebene der Anlage aneinander, wenn das betreffende Kraftfahrzeug noch vor diesem Bürsten-

-2-

DMMERZBANK STUTTGART (BLZ 600 400 71) 7751027 · POSTSCHECKAMT STUTTGART 25780-700 · TELEFONISCHE AUSKÜNFTE SIND UNVERBINDLICH

paar steht oder dasselbe bereits passiert hat. Dieses aber hat zur Folge, daß die Frontseite und die Heckseite des betreffenden Kraftfahrzeuges oftmals nur unzureichend gewaschen werden.

Aufgabe der vorliegenden Erfindung ist es somit, diesen immer noch bestehenden Nachteil zu beseitigen und die Waschanlage nun so auszugestalten, daß ein sicheres Waschen auch sowohl der Frontseite als auch der Heckseite des Fahrzeuges gewährleistet ist.

Diese Aufgabe wird erfindungsgemäß dadurch gelöst, daß jeweils zwei beiderseits des Vorschubweges befindliche Waschbürsten in ihrer eingeschwenkten Stellung über die Mittellinie des Kraftfahrzeugvorschubweges vorstehen und in der Vorschubrichtung gesehen zueinander derart versetzt sind, daß zunächst die eine Bürste mit der Frontseite oder der Heckseite des Fahrzeuges in Berührung kommt und die andere Bürste erst an der Frontseite oder Heckseite angesetzt wird, wenn die erste Bürste diesen Bereich bereits verlassen hat. Bei dieser Anordnung der Waschbürsten zueinander ist es dabei zweckmäßig, wenn die Bürsten um etwa 1,5 bis 2,5 D zueinander versetzt sind, wenn "D" der jeweilige Bürstendurchmesser ist.

Eine solche Versetzung der Bürsten zueinander läßt sich beispielsweise dadurch erreichen, daß das Portal gegenüber der Vorschubrichtung schräggestellt ist, wobei die beiderseitigen Portalstützen dann in der Vorschubrichtung gesehen zueinander versetzt sind.

-3-

Eine andere Möglichkeit, eine solche Versetzung der Bürsten zueinander herbeizuführen, besteht darin, daß das Portal zwar zur Vorschubrichtung quer steht, an den beiden Portalstützen dann jedoch jeweils ein der Vorschubrichtung paralleler, der Anlenkung des zugeordneten Tragarmes dienender Ausleger angeordnet ist, von denen der eine dann in die Vorschubrichtung weist und der andere entgegen derselben.

Es sind sowohl stationäre als auch verfahrbare Waschanlagen zum Waschen von Kraftfahrzeugen bekannt. Sind diese Anlagen stationär aufgestellt, so ist deren Baulänge zwar relativ klein, jedoch ist eine besondere Schleppanlage erforderlich, mittels der die Kraftfahrzeuge durch die Anlage hindurchgezogen werden. Handelt es sich dagegen um größere Kraftfahrzeuge, so werden diese mit eigener Kraft durch die Anlage hindurchgefahren, wobei es jedoch sehr schwierig ist, eine maximale Geschwindigkeit einzuhalten, andernfalls insbesondere bei der Wäsche der Fahrzeugfrontseite dadurch Schwierigkeiten auftreten, daß die Scheibenwischer, Spiegel oder andere Zusatzeinrichtungen des Fahrzeuges abgerissen werden. Ist die Anlage dagegen hin- und herfahrbar, so treten hierbei die zuvor aufgezeigten Schwierigkeiten nicht mehr auf, jedoch ist dann eine erhebliche größere Baulänge erforderlich, die insbesondere durch die Länge größerer Fahrzeuge bedingt ist.

Eine weitere Aufgabe der vorliegenden Erfindung ist es somit, auch diese oben aufgezeigten Schwierigkeiten zu beseitigen und diese Waschanlage der zuvor aufgezeigten Art so auszubilden, daß bei einer nur geringen Baulänge und damit entsprechend geringen Kosten für Fundamente und Installationen eine hohe Waschleistung und eine optimale Betriebssicherheit auch noch bei einer erhöhten Durchfahrgeschwindigkeit zu erreichen ist.

Diese zweite Aufgabe wird erfindungsgemäß nun dadurch gelöst, daß das die Waschbürsten tragende Portal nur über einen Teil der Gesamtlänge der Waschanlage derart hin- und herfahrbar ist, daß das Portal mit den Waschbürsten dem Vorschub des Fahrzeuges teilweise folgt und somit bei gleicher Relativgeschwindigkeit des Fahrzeuges zu den Waschbürsten die Durchfahrgeschwindigkeit des Fahrzeuges erhöht werden kann, ohne daß hierzu etwa eine größere Baulänge erforderlich ist. Ein solcher teilweiser Vorschub des die Waschbürsten tragenden Portales bringt zudem auch noch eine erhöhte Betriebssicherheit mit sich. Durch diesen nur kurzen Weg des Portales der etwa 0,5 bis 0,7 des gesamten Fahrzeugweges betragen kann, weist die erfindungsgemäße Waschanlage alle Vorteile sowohl einer stationären als auch einer fahrbaren Bauform auf. Auch kann eine solche Waschanlage selbstverständlich in beiden Richtungen durchfahren werden.

Weitere Einzelheiten der vorliegenden Erfindung ergeben sich aus der folgenden Beschreibung einer auf der Zeichnung dargestellten beispielsweisen Ausführungsform sowie den sich hieran anschließenden Ansprüchen.

Es zeigen:

    Fig. 1   eine Draufsicht der erfindungsgemäßen
             Waschanlage und

    Fig. 2   eine Seitenansicht derselben.

Die auf der Zeichnung dargestellte Waschanlage weist zwei einander parallel gerichtete mit 1 und 2 bezeichnete Radabweiser auf, die in einem Abstand a voneinander angeordnet sind und sich über eine Länge 1 von beispielsweise 16,0 m erstrecken. Um das Einfahren des Kraftfahrzeuges in Richtung des Pfeiles 3 zu erleichtern, sind die beiderseitigen Enden 4 dieser Radabweiser 1 und 2 nach außen abgebogen. Zwischen diesen Radabweisern 1 und 2 befindet sich weiterhin eine mit 5 bezeichnete Entwässerungsrinne, die sich über die gleiche Länge 1 erstreckt.

Benachbart zu der mit 6 bezeichneten Einfahrt befindet sich eine die Anlage steuernde Lichtschranke 7 deren Sender mit 8 und deren Empfänger mit 9 bezeichnet sind. Hinter dieser Lichtschranke 7 ist ein sogenannter Benetzungsstand 10 angeordnet, aus dem das zum Waschen erforderliche Wasser austritt. Diesem Benutzungsstand 10 ist ein Nachspülstand 11 zugeordnet, der sich vor der Ausfahrt 12 befindet und dem eine weitere mit der Lichtschranke 7 zusammenwirkende Lichtschranke 13 vorgelagert ist, deren Sender mit 14 und deren Empfänger mit 15 bezeichnet sind.

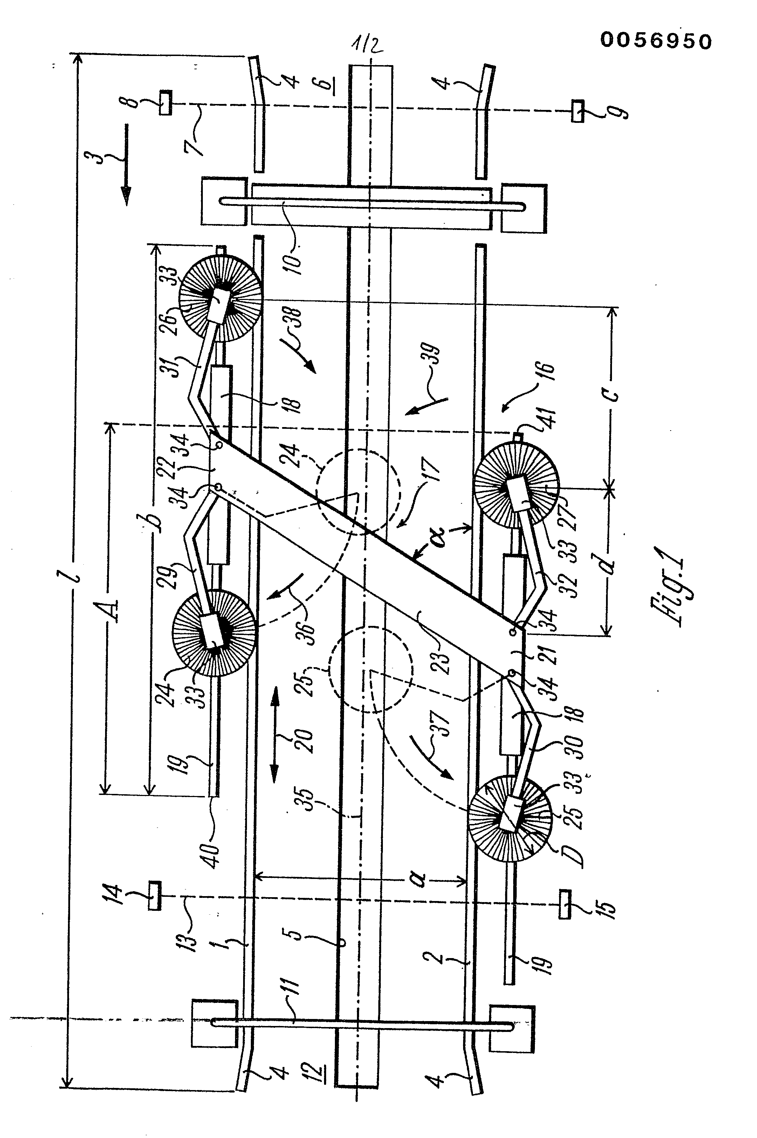

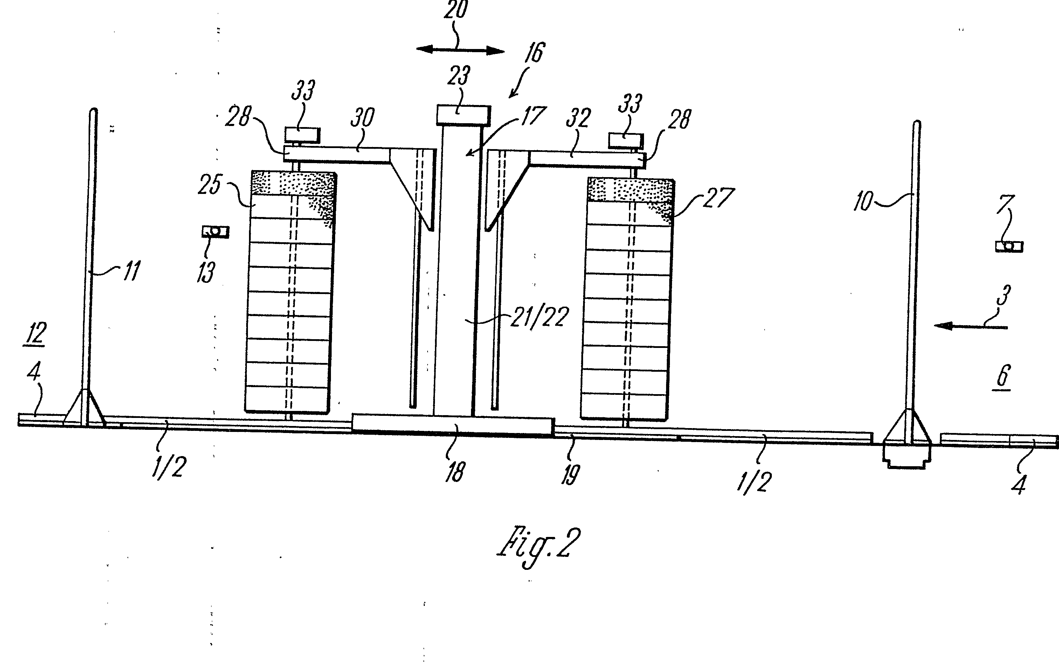

Zwischen dem Benetzungsstand 10 und der Lichtschranke 13 ist eine mit 16 bezeichnete Bürstenwascheinrichtung angeordnet, die ein Portal 17 aufweist, das mittels nicht besonders dargestellter, in seinen Fußteilen 18 gelagerter Räder auf beiderseits der Radabweiser 1 und 2 angeordneter, eine Länge b von etwa 8,0 m aufweisender Schienen 19 in Richtung des Pfeiles 20 hin- und herfahrbar ist. Die Stützen 21 und 22 dieses Portales 17 sind dabei in der Vorschubrichtung 3 des zu waschenden Kraftfahrzeuges gesehen derart um das Maß c zueinander versetzt, daß der Portalsteg 23 gegenüber der Vorschubrichtung 3 eine Neigung $\lambda$ von etwa 60° aufweist. Dieses Portal 17 wieder dient dabei der Halterung von vier mit 24 bis 27 bezeichneter Waschbürsten, die an den freien Enden 28 von an den Portalstützen 21 und 22 angelenkten Tragarmen 29 bis 32 angeordnet sind. Wie sich insbesondere aus der Fig. 2 ergibt, so sind die Waschbürsten 24 bis 27 dabei fliegend gelagert und werden jeweils durch einen mit 33 bezeichneten Motor in Umlauf gesetzt. Die um die vertikalen Achsen 34 schwenkbaren Tragarme 29 bis 32 sind abgekröpft, wobei ihre Länge d so bemessen ist, daß die Waschbürsten 24 bis 27 in ihrer in der Fig. 1 gestrichelt dargestellten eingeschwenkten Stellung über die Längsmittelebene 35 der Waschanlage hinausragen.

Die Wirkungsweise dieser erfindungsgemäßen Waschanlage ist die folgende: Wird ein nicht besonders dargestelltes Kraftfahrzeug in Richtung des Pfeiles 3 zwischen den Radabweisern 1 und 2 beispielsweise mit eigener Kraft hindurchgefahren, so passiert es zunächst einmal die Lichtschranke 7, mittels der der Benetzungsstand 10 gesteuert wird und in Tätigkeit tritt. Beim Passieren dieses Benetzungsstandes 10 wird das Kraftfahrzeug mit ausreichend Waschwasser versorgt, wobei es dann anschließend zur Bürstenwascheinrichtung 16 gelangt. Hierbei behalten die beiden hinteren Waschbürsten 26 und 27 zunächst ihre in der Fig. 1 dargestellte Ruhestellung bei, um sich jedoch anschließend nach dem Passieren der Frontseite des Kraftfahrzeuges an dessen Seitenflächen anzulegen. Bei einer Weiterfahrt des Kraftfahrzeuges trifft dasselbe mit seiner Frontseite zunächst auf die vordere, ihre in der Fig. 1 gestrichelt dargestellte eingeschwenkte Arbeitsstellung einnehmende Waschbürste 24, die bei dem weiteren Vorschub des Kraftfahrzeuges in Richtung des Pfeiles 36 ausweicht und dabei die rechte Frontseite des Kraftfahrzeuges wäscht. Sobald die Frontseite des Kraftfahrzeuges gegen die andere, ebenfalls ihre eingeschwenkte Arbeitsstellung einnehmende, vordere Waschbürste 25 stößt, weicht diese in Richtung des Pfeiles 37 aus, wobei dann die linke Frontseite des Kraftfahrzeuges gewaschen wird. Sobald die Frontseite des Kraftfahrzeuges diese Waschbürsten 24 und 25 passiert hat, legen sich auch diese an den Seitenflächen des Kraftfahrzeuges an und waschen dieselben. Sobald nun die Heckpartie des Fahrzeuges die hintere Waschbürste 26 passiert hat, führt diese eine Schwenkbewegung in Richtung des Pfeiles 38 aus und legt sich dabei an die Heckpartie an, so daß jetzt die rechte Heckpartie gewaschen wird. Nach dem Passieren auch der anderen hinteren Waschbürste 27 führt diese eine Schwenkbewegung in Richtung des Pfeiles 39 aus und wäscht dabei den linken Teil der Heckpartie.

Diesem Waschvorgang ist dabei noch eine Vorschubbewegung der Bürstenwascheinrichtung 16 in Richtung des Pfeiles 20 überlagert. Dieser Vorschub des die Bürstenwascheinrichtung 16 tragenden Portales 17 erfolgt dabei in an sich bekannter Weise in Abhängigkeit der jeweiligen elektrischen Leistungsaufnahme der Waschbürsten 24 bis 27. Durch diesen Vorschub längs des durch die Länge b der Schienen 19 bestimmten Portalfahrweges und dem dadurch bedingten Folgen der Waschbürsten 24 bis 27 kann einerseits die Vorschubgeschwindigkeit des zu reinigenden Kraftfahrzeuges erhöht werden. Andererseits aber können durch diesen Vorschub der Bürstenwascheinrichtung 16 auch bei dem Waschvorgang auftretende Stöße aufgefangen und ausgeglichen werden. Die Länge b dieses Portalfahrweges entspricht dabei etwa 50% bis 70 % der Gesamtlänge 1 der Waschanlage.

Sobald das in Richtung des Pfeiles 3 vorgeschobene Kraftfahrzeug die zweite Lichtschranke 13 erreicht, wird der Nachspülstand 11 in Betrieb gesetzt, so daß das frisch gewaschene Kraftfahrzeug anschließend noch abgespült wird. Hat das Kraftfahrzeug die zweite Lichtschranke 13 passiert, so werden die die Bürsten 24 bis 27 haltenden Tragarme 29 bis 32 in ihre in der Fig. 1 gezeigte Ruhestellung zurückgeschwenkt und nach einer Zeitverzögerung der Nachspülstand 11 außer Betrieb gesetzt. Ist dieses geschehen, so wird das Portal 17 zusammen mit den Waschbürsten 24 bis 27 wieder in seine Ausgangsstellung zurückgefahren.

**0056950**

Ist der Abstand A zwischen der Vorderkante 40 der einen nach rückwärts versetzten Schiene 19 und der Hinteranderen kante 41 der /nach vorwärts versetzten Schiene 19 ausreichend groß bemessen und ist die Länge des zu waschenden Kraftfahrzeuges kleiner als dieser Abstand A, so kann dieses im Bereich A abgestellte Kraftfahrzeug auch im Stand gewaschen werden.

Bezugszeichenliste:

1  Radabweiser
2  Radabweiser
3  Pfeil
4  Enden von 1/2
5  Entwässerungsrinne
6  Einfahrt
7  Lichtschranke
8  Sender von 7
9  Empfänger von 7
10 Benetzungsstand
11 Nachspülstand
12 Ausfahrt
13 Lichtschranke
14 Sender von 13
15 Empfänger von 13
16 Bürstenwascheinrichtung
17 Portal
18 Fußteile
19 Schienen
20 Pfeil
21 Stütze von 17
22 Stütze von 17
23 Portalsteg
24 Waschbürste vorn
25 Waschbürste vorn
26 Waschbürste hinten
27 Waschbürste hinten
28 Enden von 29/32

29 Tragarm zu 24
30 Tragarm zu 25
31 Tragarm zu 26
32 Tragarm zu 27
33 Motor von 24 bis 27
34 Schwenkachsen von 29/32
35 Längsmittelebene
36 Pfeil
37 Pfeil
38 Pfeil
39 Pfeil
40 Vorderkante von 19
41 Hinterkante von 19

a = Abstand 1/2
b = Länge von 19
c = Abstand 24/25 u. 26/27
d = Länge 29 bis 32
l = Länge 1/2
D = Durchmesser von 24/27
A = Abstand 40/41

PATENTANWA**00 56950**

DIPL.-ING. GERD COMMENTZ

7 STUTTGART 1

KLIPPENECKSTRASSE 4 · TELEFON (0711) 465644

13. Januar 1982 C)F

R 1705 EP

Rudolf Siewert, Gerokstrasse 18, 7132 Illingen/Württ.

Bundesrepublik Deutschland

## Waschanlage für Kraftfahrzeuge od. dgl.

### Ansprüche:

1. Waschanlage für Kraftfahrzeuge od. dgl. bestehend aus mindestens vier paarweise beiderseits des Fahrzeugweges angeordneten, maschinell angetriebenen und um senkrechte Drehachsen umlaufenden Waschbürsten, wobei jede Waschbürste an dem freien Ende mindestens eines um eine vertikale Achse schwenkbaren Tragarmes angeordnet ist und diese Tragarme wieder an den beiderseitigen Stützen eines längs des Fahrzeugweges hin- und herfahrbaren Portales angelenkt sind, dadurch gekennzeichnet, daß jeweils zwei beiderseits des Vorschubweges (3) befindliche Waschbürsten (24 bis 27) in ihrer eingeschwenkten Stellung über die Mittellinie (35) des Fahrzeugvorschubweges (3) vorstehen und jeweils paarweise (24/25 und 26/27) in der Vorschubrichtung (3) gesehen zueinander versetzt sind.

-2-

OMMERZBANK STUTTGART (BLZ 600 400 71) 7751027 · POSTSCHECKAMT STUTTGART 25780-700 · TELEFONISCHE AUSKÜNFTE SIND UNVERBINDLICH

2. Waschanlage nach Anspruch 1, dadurch gekennzeichnet, daß die Waschbürsten (24 bis 27) um etwa 1,5 bis 2,5 D zueinander versetzt sind, wenn "D" der jeweilige Bürstendurchmesser ist.

3. Waschanlage nach Anspruch 1 und/oder 2, dadurch gekennzeichnet, daß das Portal (17) gegenüber der Vorschubrichtung (3) schräggestellt ist, wobei die beiderseitigen Portalstützen (21,22) in der Vorschubrichtung (3) gesehen zueinander versetzt sind.

4. Waschanlage nach Anspruch 1 und/oder 2, dadurch gekennzeichnet, daß das Portal (17) zur Vorschubrichtung (3) quer steht und an den beiden Portalstützen (21,22) jeweils ein der Vorschubrichtung (3) paralleler, der Anlenkung des zugeordneten Tragarmes dienender Ausleger angeordnet ist, von denen der eine in die Vorschubrichtung (3) weist, der andere dagegen entgegen derselben.

5. Waschanlage nach einem oder mehreren der Ansprüche 1 bis 4, dadurch gekennzeichnet, daß das die Waschbürsten (24 bis 27) tragene Portal (17) nur über einen Teil der Gesamtlänge (1) der Waschanlage hin- und herfahrbar ist.

6. Waschanlage nach Anspruch 5, dadurch gekennzeichnet, daß die Länge (b) des Portalfahrweges (20) etwa gleich 0,5 bis 0,7 der Länge (1) der Waschanlage ist.

Fig.1

0056950

*Fig.2*

0056950

# 0056950

Europäisches Patentamt

**EUROPÄISCHER RECHERCHENBERICHT**

Nummer der Anmeldung

EP 82 10 0216.9

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - A - 2 128 137 (BERNARDI BROS.)<br>* Ansprüche 1, 6 * | 1,3 | B 60 S 3/06 |
| X | US - A - 3 908 219 (P.W. CHAPMAN et al.)<br>* Anspruch 1 * | 1,5 | |
| X | FR - A - 2 074 484 (RATEKO)<br>* Anspruch 2 * | 1 | |
| A | DE - A - 2 140 235 (CECCATO) | | RECHERCHIERTE SACHGEBIETE (Int. Cl.³) |
| A | US - A - 3 428 983 (R. SEAKAN) | | B 60 S 3/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 19-02-1982 | BECKER |

EPA form 1503.1 06.78